# EUROPEAN PATENT APPLICATION

(11) **EP 2 816 221 A1**
(43) Date of publication of application: **24.12.2014**
(21) Application number: 14171858.5
(22) Date of filing: 10.06.2014
(51) Int. Cl.: F02N 11/08, F02N 11/12, H02J 7/34, F02N 11/14

(54) **Emergency starter device for vehicles with internal combustion engines**

(30) Priority: 12.06.2013 IT VR20130139
(71) Applicant: Ruberti, Ligi, 21047 Saronno (VA) (IT); Perego, Renzo, 22070 Bregnano (CO) (IT)
(72) Inventor: Ruberti, Luigi, 21047 Saronno (VA) (IT)
(74) Representative: Sandri, Sandro

(57) **Abstract**

An emergency starter device designed to supply the starting peak current to the battery of a vehicle driven by an internal combustion engine, comprising connecting means for connection to the battery terminals, and an electrical circuit connected to said connecting means. The electrical circuit comprises a pack of rapid charging and discharging supercapacitors (C1) which can supply a discharged battery with the peak current necessary to operate the starter motor of a motor vehicle.

## Description

### TECHNICAL FIELD

The present invention relates to an emergency starter device for vehicles with internal combustion engines.

In particular the present invention relates to an emergency device which makes it possible to start a vehicle with an internal combustion engine which has broken down and failed to start because of a battery fault, for example.

The device according to the invention comprises a portable starter comprising a series of components which enable the achievement of objectives which until recently were often thought to be impossible. These objectives include, zero ecological impact, very low self-discharge, insensitivity to temperature variations, low weight and very rapid recharging time even when the vehicle battery is discharged.

In addition, the starter according to the invention can be subject to numerous charging/discharging cycles and does not involve the chemical reactions which usually take place in traditional electric batteries.

The present invention can be applied in the field of land vehicles, nautical vessels and aircraft fitted with internal combustion engines. In particular it can be applied in the automotive sector for use with internal combustion engines of any type, size or power rating.

### BACKGROUND ART

It is known that all the traditional starter systems for vehicles with internal combustion engines are based on the use of electrical charge accumulators or chemical batteries commonly known as rechargeable electrical batteries employing lead or in the best cases lithium.

Electrical charge accumulators also known as rechargeable batteries, secondary batteries or accumulators are batteries whose charge can be completely restored by the application of an appropriate form of electrical energy.

The essential characteristics of a battery are the electric tension at the terminals (expressed in volts) and the capacity (expressed in ampere/hour).

Some types of rechargeable battery (e.g. Pb and Li-ion) are susceptible to damage caused by an incomplete charge. Other types must be discharged at scheduled intervals to prevent rapid degrading of their performance due to the memory effect.

There are various types of battery with different electrical capacities, various chemical compositions and of different shapes and sizes.

The lead-acid battery (or lead accumulator or lead-acid accumulator) is the oldest type of rechargeable battery, widely used in automotive applications for powering starter motors. This type consists of six cells in series with a potential difference or total electromotive force of 12.73 V with the circuit open and fully charged (2.13 V for each cell) and 12 V during operation (2 V for each cell).

A common problem on vehicles with internal combustion engines fitted with traditional chemical batteries is that the batteries after a certain period of use, generally several years, or after a certain period out of use, can discharge with little or no warning thereby preventing starting of the vehicle to which it is fitted.

In these cases some kind of emergency starting is required. This can consist of calling a breakdown service, using an auxiliary battery or jump starting the vehicle by using jump cables between one vehicle and another.

In some cases, especially where the vehicle battery has been discharged through lack of use, it is possible to completely recharge the battery so that it can be returned to normal use. In other cases however where the battery is dead it will be necessary to replace the old battery with a new one.

Known solutions are described in the documents DE 10-2010.062708 and US 2012/126757 which describe respectively a capacitor-based emergency starter which requires a battery and a power supply unit. These starters because of their characteristics have limited portability. These starters provide emergency starting based on the use of capacitors but are designed for fixed, permanent installation on board vehicles and thereby lose their portability. They are of limited used for roadside assistance.

### DESCRIPTION OF THE INVENTION

The present invention provides an emergency starter device for use on vehicles with internal combustion engines which makes it possible to eliminate or at least reduce the drawbacks described above.

The invention provides an emergency starter device which is very simple to manufacture and has notable practical advantages. In particular it has the advantage that it avoids all the problems related to the difficulty of using auxiliary batteries or using jump cables between one vehicle and another.

This is achieved by an emergency starter device for internal combustion engines whose features are described in the main claim.

The dependent claims of the solution proposed herein describe advantageous embodiments of the invention.

The principal advantages of this solution, in addition to all those which derive from its simple, easy to manufacture design, primarily concern the fact that it is based on supercapacitors suitably decoupled from the motor electrical circuit to which it is to be applied.

The use of this technology offers numerous, undoubted advantages which are described below.
a) Zero ecological impact.
b) Very low self-discharge rate.
c) Insensitivity to variations in temperature.
d) Very low weight.
e) Very short recharging time.
f) Can be recharged even from a discharged battery.
g) The battery has a large reserve of energy but a low availability of power.
h) Numerous charging/discharging cycles possible.
i) No internal chemical reaction.

There are no chemical reactions, only physical reactions. This has numerous advantages some of which have already been described.

The distinguishing characteristic of the starter device according to the present invention is that it does not contain any battery nor does it contain any power supply units. In particular, the starter device according to the present invention does not have a recharging socket because it does not need one. When the vehicle engine starts it recharges the capacitors of the device within a few seconds and this charge is maintained indefinitely employing this characteristic of capacitors. Alternatively, the starter device in this invention can be simply recharged by connecting it to a battery, even a battery which is partially discharged. It should be noted that the energy required for one start is just 1 Wh which when delivered in one second only means 3,600 Wh. The fact that there are no batteries in the device is a considerable advantage in terms of ecology and weight saving.

### DESCRIPTION OF THE DRAWINGS

Other features and advantages of the invention will become clear on reading the description given below of one embodiment, provided as a non-binding example, with the help of the accompanying drawings, in which:

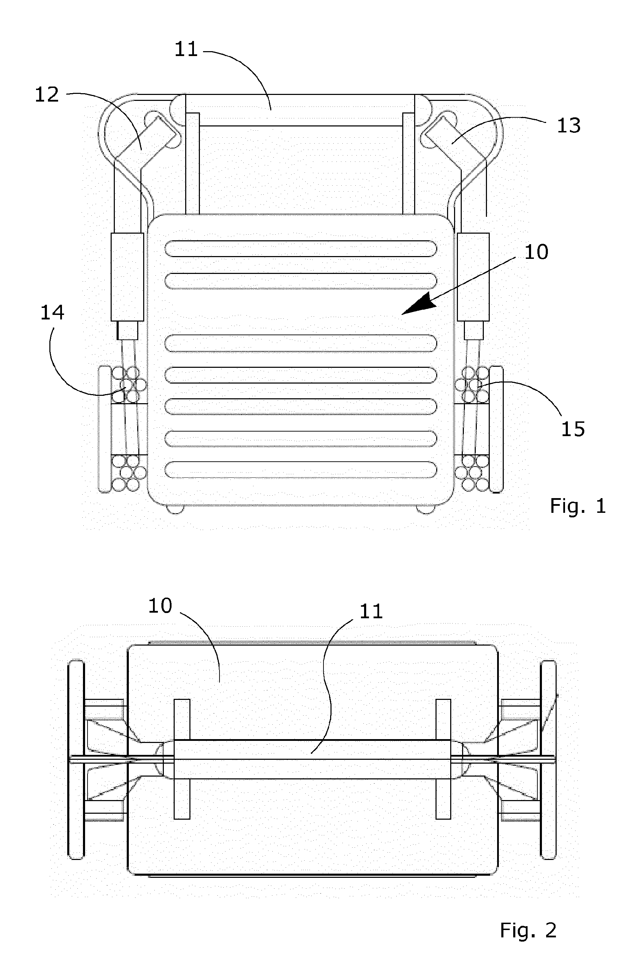

- Figure 1 is a diagram showing a front view of an example of the emergency starter device according to the present invention;
- Figure 2 is a plan view of the present invention;
- Figure 3 is a diagram showing a side view;
- Figure 4 is an electrical diagram showing the principal connections of the system according to the present invention;

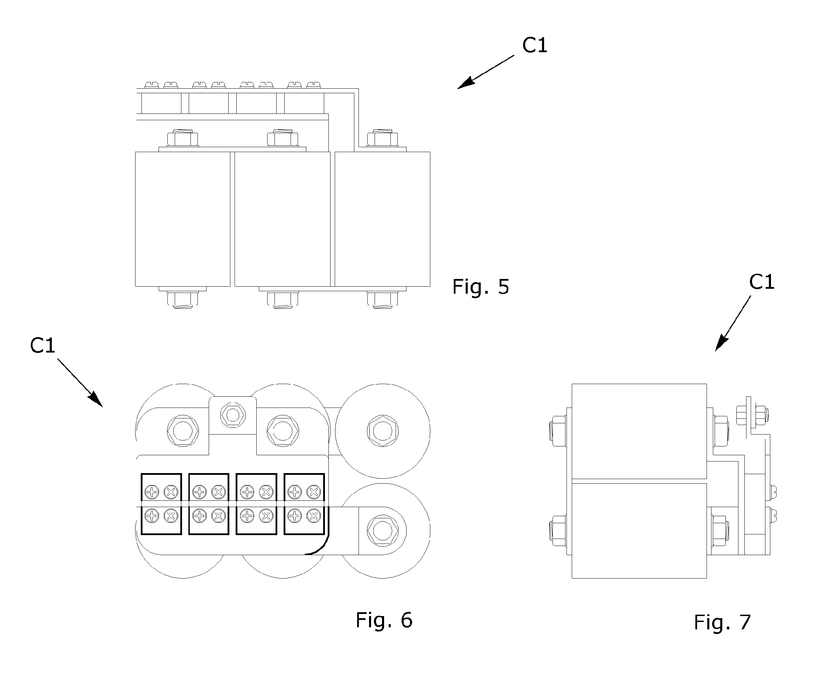

- Figures 5, 6 and 7 show respectively a front view, a plan view and a side view of the capacitor pack including the heat sink used by the starter device according to the present invention.

### DESCRIPTION OF ONE EMBODIMENT OF THE INVENTION

With reference to the accompanying figures, the emergency starter device for motor vehicles according to the present invention substantially comprises a casing 10 fitted with an appropriate carrying handle 11. On each of the two, counter-opposing outer sides there are clamps, one each side, with the positive pole 12 and the negative pole 13 for connection to the battery electrodes by means of the connecting cables 14 and 15 which can be wound onto the cable winder reels 16 provided for this purpose.

The inside of the casing 10 houses the components which deliver 12 Volt electrical power supply to the clamps 12 and 13 so that when these clamps are suitably connected they can be used to start a vehicle which has broken down because its battery is discharged.

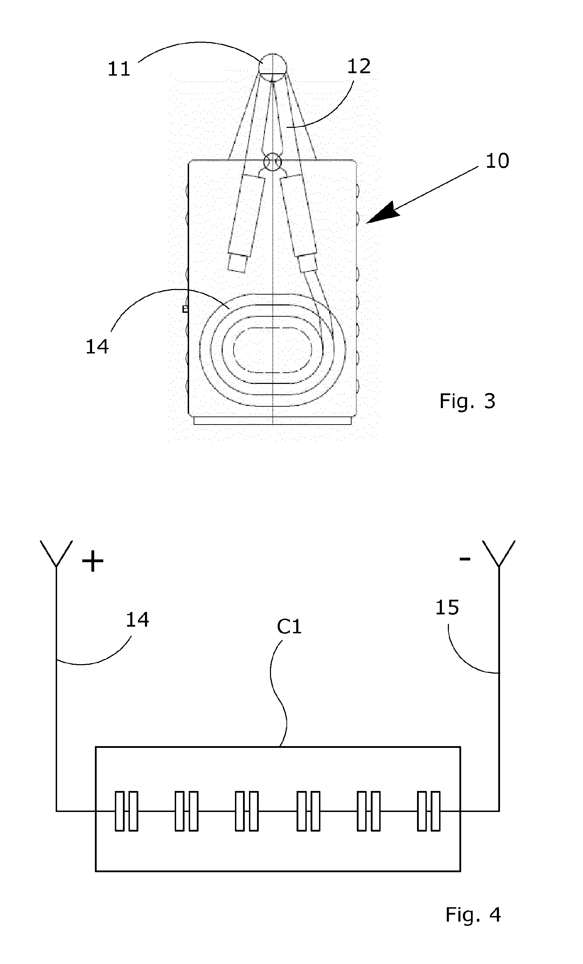

Figure 4 shows the components of the present invention used to operate the starter. These essentially comprise the component C1, that is a supercapacitor 250F 16V (6 x 1500F 2.75V in series).

The positive "+" and negative "-" poles are connected in this case to the connecting cables 14 and 15 (one red and one black with a 25 mm² section) with the respective clamps 12 and 13 which are then connected to the discharged battery to enable starting.

The 250 Farad of the supercapacitor C1 provides current peaks of over 4000 A with a voltage drop of 0.7 V for normal starting.

A supercapacitor (also known as an ultracapacitor) is a special type of capacitor whose distinguishing characteristic is that it can accumulate an exceptionally large electrical charge, which is also much greater than that of traditional capacitors. Traditional capacitors have capacitance values in the microfarad range whereas supercapacitors can have values of more than 5000 Farad.

They are devices for converting and accumulating energy characterised by high specific power and energy greatly superior to that of conventional capacitors.

Supercapacitors are primarily used as accumulators of electrical energy. In comparison with chemical batteries they have the advantage that they can be charged and discharged practically instantaneously thus guaranteeing a very high specific power. In comparison with traditional batteries they also have a much higher number charging/discharging cycles.

Their major disadvantage in comparison with chemical batteries is the low amount of energy stored.

Supercapacitors usually comprise two electrodes of various material (usually aluminium) covered with activated carbon with a high surface area (up to 2000 m2/g), a separator and an electrolyte. The separator has the function of directing the flow of ions especially those of a high current density. In some devices the electrodes can be metal oxide (e.g. ruthenium oxide) or conducting polymer. In this case the charging/discharging reaction of the supercapacitor is not of the electrostatic type but rather of the Faradic pseudocapacitance type, i.e. the reactions are Faradic at a speed comparable to that of the electrostatic type.

The electrolytes are typically aqueous or organic. Aqueous electrolytes enable use in low potential windows of approximately one volt. Organic electrolytes, on the other hand, can have potential windows of nearly three volts. A new type of electrolyte for these devices consists of ionic liquids which make it possible to work with considerably higher potential windows of up to six volts.

The energy stored is greater than that of a traditional capacitors because the charge separation is provided by a double layer electrode operating at molecular scale distances.

The use of this technology offers numerous, undoubted advantages which are listed and described separately below.

### a) Zero ecological impact:

Supercapacitors (ultracapacitors) consist of an aluminium can containing a dielectric film coated with nano particles of carbon of a molecular thickness. All the components can easily be recycled. The same cannot be said of the lead and acids contained in traditional batteries.

### b) Very low self-discharge rate:

Capacitors have virtually no self-discharge. Due to their construction, supercapacitors have a self-discharge of approximately 1 volt in the first days which thereafter drops to approximately 5 mV per day.

### c) Insensitivity to variations in temperature:

Supercapacitors do not manifest any reduction in performance in temperatures ranging from -65 a + 65°C. Lead batteries, on the other hand, are subject to a considerable loss of efficiency at temperatures below 0°C; this is critical because engines at these temperatures have thicker oil and require greater starting peaks.

### d) Very low weight:

The capacitor pack calculated for starting internal combustion engines up to 3.2 litres (diesel engine) and 5 litres (petrol engine) weighs approximately 2 kilograms. Traditional systems are much heavier.

### e) Very short recharging time:

Recharging could be instantaneous but during the design stage it was decided to increase the time to approximately 100 seconds in order not to overload the energy source.

### f) Can be recharged even from a discharged battery:

This concept may appear unrealistic but can be explained if one knows the chemical behaviour of lead batteries. If we try to start an engine of a vehicle which has been out of use for more than a month it sometimes happens that the starter motor will struggle to start the vehicle. However, if we measure the battery voltage we will probably obtain a reading of 12.5 V (rather than the 12.8 V of a full charge). It is likely that the energy actually available has only been halved and in effect 30/40Ah is still available. This in turn can be explained if we consider that the internal resistance of the cells of a 70Ah battery is approximately 3 mohm. Applying Ohm's law to a peak current of 400Ah gives voltage drop of 1.2V (V=RI) which when subtracted from the 12.8 nominal voltage gives a peak voltage of 11.8 V which is more than sufficient for starting the engine. Unfortunately the internal resistance at half charge can also reach 15mohm which will lead to a voltage drop of 4.5V which is not sufficient to start the engine. The internal resistance of the capacitor pack tested in experiments is always 3mOhm but remains constant for each charge level. To start an internal combustion engine of average capacity requires approximately 1 Wh which condensed in a maximum time of 1 second gives us a power availability of 3.6 KW (1h = 3600s). The battery has a large reserve of energy but a low availability of power. The capacitor can accumulate little energy but can express this energy with great power (in our case a peak of 4000Ah). To summarize. If we request great power from a battery which is nearly fully discharged, we will not get it. However, if we request the same energy over a time period which is much longer that the starting time (100 seconds rather than 1 second) we will obtain the result we require.

### g) Numerous charging/discharging cycles possible:

Supercapacitors will accept up to a million cycles (compared to the 400-500 of traditional systems) without undergoing any significant variations in performance. This means that they have a considerably longer life than traditional batteries.

### h) No internal chemical reaction:

There are no chemical reactions, only physical reactions. This has numerous advantages some of which have already been described.

To conclude, we can state that there are no disadvantages but only undoubtable improvements to the starter described in the present patent application.

The next section describes the results of four tests performed on the starter in the present invention.

Tests performed on motor vehicles with 2000 cc petrol engines and 2200 diesel engines using the following instruments:
Fluke 190 scope meter digital oscilloscope;
Fluke 175 digital multimeter;
Fluke 376 DC clamp meter.

### • First test:

Ambient temperature -5°C. Diesel engine. Battery completely disconnected. Starting only with precharged starter device.

Start time: 850 msec.

Peak current (CA): 490 Ah.

### • Second test:

As above but at temperature of 0°C.

Start time: 620 msec.

Peak current (CA): 375 Ah.

### • Third test:

As above but at temperature of 8°C.

Start time: 450 msec.

Peak current (CA): 290 Ah.

### • Fourth test:

Ambient temperature 8°C. Petrol engine. Battery partly discharged (after 2 months out of use). Battery will not start vehicle but has voltage of 12.5V (rather than 12.8V). Starter device discharged down to 6V.

Procedure: The starter device was connected to the 'discharged' battery for approximately two minutes.

Start time: 410 msec.

Peak current (CA) 210 Ah.

The invention is described above with reference to a preferred embodiment. It is nevertheless clear that the invention is susceptible to numerous variations which lie within the scope of its disclosure, in the framework of technical equivalents.

## Claims

1. An emergency starter device designed to supply the starting peak current to the battery of a vehicle driven by an internal combustion engine, comprising connecting means (12, 13, 14, 15) for connection to the battery terminals, and an electrical circuit connected to said connecting means, **characterised in that** the electrical circuit is constituted by a pack of rapid charging and discharging supercapacitors (C1) supplying a discharged battery with the peak current necessary to operate the starter motor of said vehicle.

2. A device according to claim 1, **characterised in that** the capacitor pack has an electrical capacitance of approximately 250 F thereby ensuring a current peak of over 4000 A with a voltage drop of approximately 0.7 V.

3. A device according to any one of the preceding claims, **characterised in that** the electrical circuit is enclosed in a casing (10) having a carrying handle (11).

4. A device according to any one of the preceding claims, **characterised in that** said connecting means for connection to the vehicle battery comprise a pair of clamps (12, 13) provided with connecting cables (14, 15) connected to the electrical circuit and also at least one cable winder reel attached to the casing.

5. The device according to claim 3, **characterised in that** the casing comprises a pair of anchor plates for said clamps.
